# EUROPÄISCHE PATENTSCHRIFT

(11) **EP 3 729 138 B1**
(45) Veröffentlichungstag und Bekanntmachung des Hinweises auf die Patenterteilung: **13.09.2023**
(21) Anmeldenummer: 18825926.1
(22) Anmeldetag: 12.12.2018
(51) Int. Cl.: G01S 19/42, G01S 19/22, G01S 19/28

(54) **VERFAHREN ZUR SATELLITENGESTÜTZTEN ERMITTLUNG EINER POSITION EINES FAHRZEUGS**
METHOD FOR THE SATELLITE-SUPPORTED DETERMINATION OF A POSITION OF A VEHICLE
PROCÉDÉ DE DÉTERMINATION ASSISTÉE PAR SATELLITES D'UNE POSITION D'UN VÉHICULE

(30) Priorität: 19.12.2017 DE 102017223200
(43) Veröffentlichungstag der Anmeldung: 28.10.2020
(73) Patentinhaber: Robert Bosch GmbH, 70442 Stuttgart (DE)
(72) Erfinder: EWERT, Marlon Ramon, 74199 Untergruppenbach (DE)
(86) Internationale Anmeldenummer: PCT/EP2018/084496
(87) Internationale Veröffentlichungsnummer: WO 2019/121211

(56) Entgegenhaltungen:
- CN-A- 105 807 301
- JP-A- H10 111 137
- US-A1- 2010 079 332

## Beschreibung

Die Erfindung betrifft ein Verfahren zur satellitengestützten Ermittlung einer Position eines Fahrzeugs. Die Erfindung ist insbesondere geeignet beim autonomen Fahren zur Anwendung zu kommen.

### Stand der Technik

Die Positionsbestimmung von Kraftfahrzeugen mit Hilfe von Satelliten in sogenannten GNSS-Systemen ist eine weit verbreitete Technologie, die heute schon in Navigationssystemen für Kraftfahrzeugen breiten Einsatz findet. In Zukunft wird diese Technologie insbesondere auch für den gerade neu entstehenden Technologiebereich des autonomen Fahrens immer relevanter werden.

Die Positionsbestimmung mit satellitengestützten Navigationssystemen basiert üblicherweise auf dem Prinzip der Laufzeitmessung von Signalen, die von den Satelliten des Navigationssystems ausgesendet werden.

Ein wichtiger Aspekt der Positionsbestimmung ist die Genauigkeit, welche im wesentlichen Maße von der Genauigkeit der zu Grunde liegenden Laufzeitmessung abhängt.

Aus den Schriften CN 105 807 301 A, US 2010/079332 A1 und JPH 1011137 A sind bereits Verfahren bekannt gemäß welchen Empfangshindernisse für den Empfang von Satellitensignalen in der Umgebung des Fahrzeugs erkannt und für die Positionsbestimmung berücksichtigt werden.

Mit dem hier beschriebenen Verfahren kann die Genauigkeit der Positionsbestimmung erhöht werden.

### Offenbarung der Erfindung

Hier vorgeschlagen wir ein Verfahren zur satellitengestützten Ermittlung einer (Eigen-)Position eines Fahrzeugs. Das Verfahren weist zumindest folgende Schritte auf:
a) Erkennen einer Mehrzahl von Satelliten, die zur Positionsermittlung verwendbar sein können,
b) Empfangen von Daten, die bewegbare Empfangshindernisse in der Umgebung des Fahrzeugs charakterisieren,
c) Ermitteln einer reduzierten Auswahl von Satelliten aus der Mehrzahl von Satelliten anhand der in Schritt b) empfangenen Daten,
d) Bestimmen einer Position des Fahrzeugs unter Verwendung von Signalen die von der reduzierten Auswahl von Satelliten ausgesendet wurden.

Das Verfahren ist insbesondere zur Positionsbestimmung in autonomen Fahrzeugen geeignet. Das Verfahren kann aber auch in jeder anderen Anwendung in einem Fahrzeug (beispielsweise für ein Navigationssystem) oder für ein beliebiges anderes Fahrerassistenzsystem verwendet werden.

Ein Autonomes Fahrzeug ist ein Fahrzeug, das ohne Fahrer auskommt. Das Fahrzeug fährt dabei autonom, indem es beispielsweise den Straßenverlauf, andere Verkehrsteilnehmer oder Hindernisse selbständig erkennt und die entsprechenden Steuerbefehle im Fahrzeug berechnet sowie diese an die Aktuatoren im Fahrzeug weiterleitet, wodurch der Fahrverlauf des Fahrzeugs korrekt beeinflusst wird. Der Fahrer ist bei einem vollautonomen Fahrzeug nicht am Fahrgeschehen beteiligt. Gegenwärtig verfügbare Fahrzeuge sind noch nicht in der Lage autonom zu agieren. Zum einen weil die entsprechende Technik noch nicht voll ausgereift ist. Zum anderen, weil es heut zu Tage noch gesetzlich vorgeschrieben ist, dass der Fahrzeugführer jederzeit selbst in das Fahrgeschehen eingreifen können muss. Dies erschwert die Umsetzung von autonomen Fahrzeugen. Jedoch gibt es bereits verschiedene Systeme, die ein autonomes oder teilautonomes Fahren darstellen. Diese Systeme befinden sich in der intensiven Testphase. Bereits heute ist absehbar, dass in einigen Jahren vollautonome Fahrzeugsysteme auf den Markt kommen werden, sobald die oben genannten Hürden aus dem Weg geräumt wurden.

Fahrerassistenzsysteme sind elektronische Zusatzeinrichtungen in Kraftfahrzeugen zur Unterstützung des Fahrers in bestimmten Fahrsituationen. Hierbei stehen oft Sicherheitsaspekte, aber auch die Steigerung des Fahrkomforts im Vordergrund. Ein weiterer Aspekt ist die Verbesserung der Ökonomie. Fahrerassistenzsysteme greifen teilautonom oder autonom in Antrieb, Steuerung (z. B. Gas, Bremse) oder Signalisierungseinrichtungen des Fahrzeuges ein oder warnen durch geeignete Mensch-Maschine-Schnittstellen den Fahrer kurz vor oder während kritischer Situationen. Derzeit sind die meisten Fahrerassistenzsysteme so konzipiert, dass die Verantwortung beim Fahrer bleibt und dieser damit nicht entmündigt wird. Für Fahrerassistenzsysteme kommen verschiedene Arten von Umfeldsensorik zum Einsatz, unter anderem: Ultraschall (Einparkhilfe), Radar (Spurwechselassistent, automatischer Abstandswarner), Lidar (Totwinkel-Überwachung, automatischer Abstandswarner, Abstandsregelung, Pre-Crash und PreBrake), Kamera (Spurverlassenswarnung, Verkehrszeichenerkennung, Spurwechselassistent, Totwinkel-Überwachung, Notbremssystem zum Fußgängerschutz), GNSS Sensoren (zur Lokalisierung des Fahrzeugs).

Wie im Folgenden noch näher ausgeführt wird, kann das Verfahren insbesondere im Zusammenhang mit sogenannter Fahrzeug-zu-Fahrzeug Kommunikation eingesetzt werden.

Unter Fahrzeug-zu-Fahrzeug Kommunikation (engl.: Car-to-Car Communication, oder kurz: Car2Car oder C2C) wird der Austausch von Informationen und Daten zwischen (Kraft-)Fahrzeugen verstanden. Ziel dieses Datenaustausches ist es, dem Fahrer frühzeitig kritische und gefährliche Situationen zu melden. Die betreffenden Fahrzeuge sammeln Daten, wie ABS-Eingriffe, Lenkwinkel, Position, Richtung und Geschwindigkeit, und senden diese Daten über Funk (WLAN, UMTS, etc.) an die anderen Verkehrsteilnehmer. Dabei soll die "Sichtweite" des Fahrers mit elektronischen Mitteln verlängert werden. Unter Fahrzeug-zu-Infrastruktur Kommunikation (engl.: Car-to-Infrastructure, oder kurz: C2I) wird der Austausch von Daten zwischen einem Fahrzeug und der umliegenden Infrastruktur (z.B. Lichtzeichenanlagen verstanden). Die genannten Technologien basieren auf dem Zusammenwirken von Sensoren der verschiedenen Verkehrspartner und verwenden neueste Verfahren der Kommunikationstechnologie zum Austausch dieser Informationen.

Das Verfahren kann weiterhin in einem Positionssensor oder in einer elektronischen Schaltung eines Positionssensor eingesetzt werden. Der Positionssensor kann auch ein Bewegungssensor sein, mit welchen Positionsveränderungen erfasst werden.

Positionssensoren können auch als kombinierte Bewegungs- und Positionssensoren vorgesehen sein können. Entsprechende Positionssensoren werden für das automatisierte Fahren benötigt und berechnen eine Hochgenaue Fahrzeugposition mit Hilfe von Navigationssatellitendaten (GPS, GLONASS, Beidou, Galileo), die auch als GNSS (Globales Navigationssatelliten System)-Daten bezeichnet werden. Darüber hinaus können Korrekturdaten von so genannten Korrekturdiensten im Sensor mitverwendet werden, um die Position des Fahrzeugs noch genauer zu berechnen. Zusammen mit den empfangenen GNSS-Daten wird im Positionssensor regelmäßig auch eine hochgenaue Zeit (wie Universal Time) eingelesen und für die genaue Positionsbestimmung verwendet. Weitere Eingangsdaten in den Positionssensor können Raddrehzahlen, Lenkwinkel, sowie Beschleunigungs- und Drehratendaten sein.

Ein entsprechender Positionssensor wertet in einer Standard-Einstellung alle anhand des Almanachs sichtbaren Satelliten am Himmel für die interne Positionsbestimmung aus. In bestimmten Szenarien wie zum Beispiel im Stadtverkehr kann dies zu fehlerbehafteten Positionsbestimmungen führen, weil auch Satellitendaten von Satelliten berücksichtigt werden, welche aufgrund von Gebäudeverdeckungen nicht sichtbar sind. Es werden also auch so genannte Multi-Pfad Reflexionen der verdeckten Satelliten an den umliegenden Gebäuden im Positionssensor empfangen und ausgewertet. Dadurch wird die Positionsbestimmung im Positionssensor negativ beeinflusst. Diesem Aspekt kann mit dem hier beschriebenen Verfahren entgegen gewirkt werden..

Bei dem Fahrzeug für welches das hier beschriebene Verfahren eingesetzt wird, kann es sich um ein Automobil handeln. Vorzugsweise ist das Fahrzeug ein autonomes Fahrzeug. Das Verfahren kann aber auch in und mit jedem anderen Fahrzeug durchgeführt werden. Das Verfahren kann insbesondere zu einer dynamischen Selektion von GNSS-Daten in einem Positionssensor eines Fahrzeugs beitragen beziehungsweise verwendet werden. Das Verfahren lässt sich mit anderen Worten insbesondere dadurch beschreiben, dass diejenigen Satelliten temporär aus den Berechnungen der Fahrzeugposition ausgeschlossen werden, welche durch bewegbare Empfangshindernisse, insbesondere weitere Verkehrsteilnehmer im Straßenverkehr für eine bestimmte Zeit nicht sichtbar sind.

In Schritt a) wird zunächst eine Mehrzahl von Satelliten erkannt, die zur Positionsermittlung, d.h. zur Ermittlung der Fahrzeug(-eigen-)position, verwendbar sind bzw. verwendet werden können. Hiervon können auch Satelliten erfasst sein, die temporär abgeschattet bzw. nicht für einen unmittelbaren Signalempfang zur Verfügung stehen.

In Schritt b) erfolgt ein Empfangen von Daten, die bewegbare Empfangshindernisse in der Umgebung des Fahrzeugs charakterisieren. Unter "bewegbaren" Empfangshindernissen sind solche Empfangshindernisse zu verstehen, die ihre (geodätische) Position relativ zu einem festen Punkt auf der Erdoberfläche verändern können. Bewegbare Empfangshindernisse können insbesondere weitere Verkehrsteilnehmer, vorzugsweise weitere Kraftfahrzeuge, wie Automobile und/oder Lastkraftwagen sein. Bewegbare Empfangshindernisse charakterisierende Daten können beispielsweise die Art des Hindernisses, dessen Lage, Position, räumliche Ausdehnung, räumliche Orientierung, Geschwindigkeit und/oder Beschleunigung umfassen. Diese Daten können von dem bewegbaren Empfangshindernis selbst bereitgestellt werden. Alternativ oder kumulativ kann das eigene Fahrzeug über Sensoren, z. B. Umfeldsensoren zum Erfassen von zumindest einigen dieser Daten ausgestattet sein. Die so erfassten Daten können (innerhalb des eigenen Fahrzeugs) an einen diese empfangenden Positionssensor weitergeleitet werden. Weiterhin können zumindest einige der Daten auch (mittelbar) von einer zentralen Verwaltungseinrichtung bereitgestellt werden.

Es ist für Genauigkeit der Positionsbestimmung von besonderer Bedeutung insbesondere auch bewegbare Empfangshindernisse als Empfangshindernisse zu erkennen und zu berücksichtigen. Bewegbare Empfangshindernisse unterscheiden sich von nicht bewegbaren Empfangshindernissen im Hinblick auf Ihre Auswirkungen auf die genaue Positionsbestimmung insbesondere dadurch, dass sie unerwarteter auftreten und ihre Auswirkungen auf die Positionsbestimmung daher schwieriger vorherzusehen und abzuschätzen sind.

Beispielsweise kann die Bestimmung der Lage weiterer Verkehrsteilnehmer relativ zum eigenen Fahrzeug mit Hilfe von Umfeldsensoren oder über einen Positionsaustausch zwischen den Fahrzeugen (beispielsweise Fahrzeug-zu-X) erfolgen. Anschließend kann die Bestimmung der Fahrzeugmaße über die Umfeldsensoren des eigenen Fahrzeugs oder durch eine Übertragung der Fahrzeugmaße aus den Fahrzeugen heraus über eine Kommunikationsschnittstelle (beispielsweise Fahrzeug-zu-X) erfolgen. Gegebenenfalls reicht es auch zur Erkennung von bewegbaren Empfangshindernissen nur die Umfeldsensoren des Kraftfahrzeugs einzusetzen. In einem weiteren Schritt kann die Lage des Fahrzeugs auf einer Karte bestimmt und daraus die Orientierung des Fahrzeugs zu den sichtbaren Satelliten bestimmt werden. Neben dem eigenen Fahrzeug werden auch die weiteren beweglichen Hindernisse auf der hochgenauen Karte relativ zum einen Fahrzeug geortet und bezüglich der Lage und Orientierung zum eigenen Fahrzeug und dem Satellitenhimmel kartographiert bzw. gemapped.

In Schritt c) erfolgt ein Ermitteln einer reduzierten Auswahl von Satelliten aus der Mehrzahl von Satelliten anhand der in Schritt b) empfangenen Daten. Hierzu können aus den in Schritt b) empfangenen Daten beispielsweise ein (kürzester) Abstand zwischen dem Empfangshindernis und dem eigenen Fahrzeug und/oder eine (mögliche) Abschattung(-swahrscheinlichkeit) des Satellitensignals eines bestimmten Satelliten durch das Empfangshindernis berechnet bzw. prognostiziert werden. Ein entsprechend abgeschatteter Satellit kann dann aus der reduzierten Auswahl ausgeschlossen werden, sodass nur Satelliten zur Positionsbestimmung in Schritt d) berücksichtigt werden, deren Signale unmittelbar empfangen werden können.

Nach einer vorteilhaften Ausgestaltung wird vorgeschlagen, dass die Mehrzahl von Satelliten in Schritt c) um Satelliten reduziert wird, deren ausgesendete Signale durch bewegbare Empfangshindernisse, die durch die in Schritt b) empfangenen Daten charakterisiert sind, beeinflusst sein könnten bzw. sind.

Überholt beispielsweise ein Automobil einen LKW, so können die Satelliten des Almanachs hinter dem LKW für die Dauer des Überholvorgangs aus den Positionsberechnungen ausgeschlossen werden. Multipfadreflexionen der gleichen Satelliten an weiteren Verkehrsteilnehmern, Infrastruktureinrichtungen und/oder Gebäuden z. B. auf der vom LKW abgewandten Seite des eigenen Fahrzeugs können hierbei ebenfalls ignoriert werden. Nach dem Überholvorgang kann eine erneute Berücksichtigung der nun wieder sichtbaren Satelliten in den Positionsberechnungen erfolgen. Auf diese Weise kann die Positionsbestimmung besonders vorteilhaft verbessert werden, insbesondere da Multipfadreflexionen nicht sichtbarer Satelliten durch den kompletten Ausschluss dieser Satelliten aus den Berechnungen von vorne herein unberücksichtigt bleiben.

Nach einer weiteren vorteilhaften Ausgestaltung wird vorgeschlagen, dass die Mehrzahl von Satelliten in Schritt c) (zusätzlich) um Satelliten reduziert wird, die einen Winkel zum Horizont aufweisen, der kleiner ist als ein Mindestinklinationswinkel. Der Mindestinklinationswinkel kann beispielsweise 15° [Grad] oder sogar 30° betragen.

So können Satelliten, welche einen geringen bzw. zu geringen Inklinationswinkel zum Horizont aufweisen (beispielsweise <15°) in bestimmten Szenarien in den Positionsberechnungen grundsätzlich verworfen werden. Dies kann insbesondere unabhängig davon geschehen, ob sich diese Satelliten konkret durch ein bewegbares Empfangshindernis oder ein unbewegbares Empfangshindernis verdeckt sind oder nicht. Diese Ausgestaltung des Verfahrens kann mit relativ wenig Aufwand realisiert werden, da die Satelliten mit geringem Inklinationswinkel aus dem GNSS-Almanach extrahiert werden können. Bei der Berechnung der GNSS basierten Position werden somit nur diejenigen Satelliten verwendet, welche einen ausreichend hohen Inklinationswinkel zum Horizont aufweisen. Besonders bevorzugt ist zudem, dass die Selektion der gültigen Satelliten von Zeit zu Zeit aktualisiert wird (z.B. mindestens alle 5 Minuten), um sicherzustellen, dass Satelliten, die am Horizont aufsteigen und einen ausreichend hohen Inklinationswinkel zum Horizont aufweisen neu berücksichtigt werden und Satelliten, die wiederum am Horizont versinken aus den Berechnungen ausgeschlossen werden, sobald diese den Mindestinklinationswinkel zum Horizont unterschreiten. Diese Ausgestaltung des Verfahrens kann jedoch in der Praxis auch kontraproduktiv sein. Beispielsweise sollten im Stadtverkehr möglichst alle verfügbaren Satelliten verwendet werden, um die Fahrzeugposition hochgenau bestimmen zu können. Unter anderem ist dies aufgrund hoher Gebäude, welche bestimmte Satelliten verdecken können, nötig. Das beschriebene Verfahren kann dadurch erweitert werden, dass zur Positionsbestimmung zusätzlich je nach Ort (Position) und Umfeld des Fahrzeugs entschieden wird, ob in Schritt c) Kriterien zur Reduktion der Auswahl von Satelliten angewendet werden oder nicht.

Nach einer vorteilhaften Ausgestaltung wird vorgeschlagen, dass in Schritt b) zusätzlich Daten empfangen werden, die unbewegbare Empfangshindernisse charakterisieren und in Schritt c) die Auswahl von Satelliten zusätzlich anhand von diesen Daten reduziert wird. "Unbewegbare" Empfangshindernisse können beispielsweise Infrastruktureinrichtungen, wie etwa Lärmschutzwände, Gebäude, insbesondere Hochhäuser, Pflanzen, insbesondere hochgewachsene Bäume, oder landschaftliche Erhebungen, wie etwa Berge sein. Unbewegbare Empfangshindernisse charakterisierende Daten können beispielsweise die Art des Hindernisses, dessen Lage, Position und/oder räumliche Ausdehnung umfassen. Diese Daten können von dem unbewegbaren Empfangshindernis selbst bereitgestellt werden (Car-to-X Kommunikation). Alternativ oder kumulativ kann das eigene Fahrzeug über Sensoren, z. B. Umfeldsensoren zum Erfassen von zumindest einigen dieser Daten ausgestattet sein. Die so erfassten Daten können (innerhalb des eigenen Fahrzeugs) an einen diese empfangenden Positionssensor weitergeleitet werden. Weiterhin können zumindest einige der Daten von einer zentralen Verwaltungseinrichtung bereitgestellt werden. Dies kann zum Beispiel mit einer Cloud und/oder einem cloudbasierten Service geschehen.

Hierbei kann auf die momentane Position des Fahrzeugs in der Welt zurückgegriffen werden. Außerdem kann auf hochgenaue Kartendaten, die für das automatisierte Fahren ohnehin vorhanden sind, zurückgegriffen werden, um unbewegbare Empfangshindernisse zu identifizieren. Solche Daten können auch unterstützend verwendet werden, um bewegliche Empfangshindernisse zu identifizieren, indem je nach Ort und ggf. auch je nach Uhrzeit erkannt wird ob mit beweglichen Empfangshindernissen zu rechnen ist, in welcher Anzahl mit beweglichen Empfangshindernissen zu rechnen ist und mit Welcher Art von beweglichen Empfangshindernissen zu rechnen ist.

Der Positionssensor oder ein Zentralrechner des Fahrzeugs kennt in der Regel bereits die hochgenaue Position des Fahrzeugs auf einer hochgenauen Weltkarte. Zudem kann (je nach Implementierung) mittels des Positionssensors oder des Zentralrechners des Fahrzeugs eine Analyse des Satellitenalmanachs am Himmel relativ zur momentanen Fahrzeugposition und Fahrzeugorientierung auf der Karte erfolgen. Anschließend können diejenigen Satelliten in den Positionsberechnungen verworfen werden, welche beispielsweise aufgrund von Gebäuden oder Strukturen an der aktuellen Fahrzeugposition nicht sichtbar sind.

Hierfür befinden sich auf der hochgenauen Karte üblicherweise auch Höhendaten von Gebäuden und Strukturen entlang einer Straße. Befindet sich beispielsweise auf der rechten Seite des Fahrzeugs ein hohes Gebäude, so können alle Satelliten die sich am Horizont hinter dem Gebäude befinden und somit von der Fahrzeugantenne über ihren Inklinationswinkel zum Horizont nicht direkt sichtbar sind, aus den Berechnungen ausgeschlossen werden. Dadurch können auch die Multipfadreflexionen dieser verdeckten Satelliten an weiteren umliegenden Gebäuden relativ zum Fahrzeug unberücksichtigt bleiben. Bewegt sich das Fahrzeug nun weiter auf der Straße und die Sicht auf die vormals verdeckten Satelliten ist nach der Vorbeifahrt am hier genannten hohen Gebäude wieder gegeben, so können die nun wieder sichtbaren Satelliten in den Berechnungen berücksichtigt werden. Durch Strukturen oder Gebäude verdeckte Satelliten an der nun neuen Fahrzeugposition können wiederum aus den Berechnungen ausgeschlossen werden. Diese Ausgestaltung des Verfahrens erlaubt somit eine dynamische Selektion von Satelliten in den Berechnungen, in Abhängigkeit einer Weltkarte und den damit verbundenen um das Fahrzeug herum befindlichen Strukturen. Auf diese Weise kann die Positionsbestimmung deutlich verbessert werden, insbesondere, da auch Berechnungsungenauigkeiten aufgrund von Multipfadreflexionen nicht sichtbarer Satelliten durch den kompletten Ausschluss dieser Satelliten aus den Berechnungen von vorne herein deutlich reduziert oder sogar vermieden werden können.

Nach einer vorteilhaften Ausgestaltung wird vorgeschlagen, dass die in Schritt b) empfangenen Daten, die bewegbare Empfangshindernisse charakterisieren, zumindest teilweise aus einer Kommunikation mit weiteren Fahrzeugen stammen, welche bewegbare Empfangshindernisse in der Umgebung des Fahrzeugs bilden. Die Kommunikation ist hierbei vorteilhafterweise eine sogenannte Fahrzeug-zu-Fahrzeug Kommunikation. So können beispielsweise weitere Verkehrsteilnehmer Daten, wie etwa ihre Fahrzeugart, Lage, Position, räumliche Ausdehnung, räumliche Orientierung, Geschwindigkeit und/oder Beschleunigung mittels Fahrzeug-zu-Fahrzeug bzw. Fahrzeug-zu-X Kommunikation dem Fahrzeug zur Verfügung stellen. In weiteren Ausführungsvarianten wird eine Kombination von Umfeldsensoren und Fahrzeug-zu-X-Kommunikation verwendet, um die Position, Art und Ausdehnung von bewegbaren Empfangshindernissen genau zu bestimmen und entsprechende Daten für Schritt b) bereitzustellen.

Nach einer vorteilhaften Ausgestaltung wird vorgeschlagen, dass die in Schritt b) empfangenen Daten, die bewegbare Empfangshindernisse charakterisieren, zumindest teilweise mit Umfeldsensoren des Fahrzeugs ermittelt wurden. Darüber hinaus kann vorgesehen sein, dass die in Schritt b) zusätzlich empfangenen Daten, die unbewegbare Empfangshindernisse charakterisieren, zumindest teilweise mit Umfeldsensoren des Fahrzeugs ermittelt wurden. Ein Umfeldsensor kann beispielsweise ein Ultraschall-, Radar-, Lidar- oder Kamerasensor sein, der in oder an dem Fahrzeug angebracht ist.

Hier außerdem beschrieben werden soll ein Positionssensor, welcher zur Durchführung eines hier beschriebenen Verfahrens eingerichtet ist. Vorzugsweise ist der Positionssensor in oder an dem Fahrzeug angeordnet oder zur Montage in oder an einem solchen vorgesehen und eingerichtet. Bevorzugt handelt es sich bei dem Positionssensor um einen GNSS-Sensor. Der Positionssensor ist weiterhin bevorzugt für einen autonomen Betrieb des Fahrzeugs vorgesehen und eingerichtet. Weiterhin kann es sich bei dem Positionssensor um einen kombinierten Bewegungs- und Positionssensor handeln. Ein solcher ist für autonome Fahrzeuge besonders vorteilhaft.

Hier auch beschrieben werden soll ein Computerprogramm zur Durchführung eines hier beschriebenen Verfahrens. Dies betrifft mit anderen Worten insbesondere ein Computerprogramm(-produkt), umfassend Befehle, die bei der Ausführung des Programms durch einen Computer diesen veranlassen, ein hier beschriebenes Verfahren auszuführen. Der Positionssensor beziehungsweise eine Recheneinheit (Prozessor) des Positionssensors greift beispielsweise auf das Computerprogramm zu, um das Verfahren auszuführen.

Ferner soll auch ein maschinenlesbares Speichermedium beschrieben werden, auf dem das Computerprogramm gespeichert ist. Regelmäßig handelt es sich bei dem maschinenlesbaren Speichermedium um einen computerlesbaren Datenträger.

Die im Zusammenhang mit dem Verfahren erörterten Details, Merkmale und vorteilhaften Ausgestaltungen können entsprechend auch bei dem hier vorgestellten Positionssensor, dem Computerprogram und/oder dem Speichermedium auftreten und umgekehrt. Insoweit wird auf die dortigen Ausführungen zur näheren Charakterisierung der Merkmale vollumfänglich Bezug genommen.

Die hier vorgestellte Lösung sowie deren technisches Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und/oder Erkenntnissen aus anderen Figuren und/oder der vorliegenden Beschreibung zu kombinieren. Es zeigen schematisch:
- Fig. 1:: ein Fahrzeug, bei dem eine satellitengestützte Position ermittelt wird, und
- Fig. 2:: ein Ablaufdiagramm des beschriebenen Verfahrens.

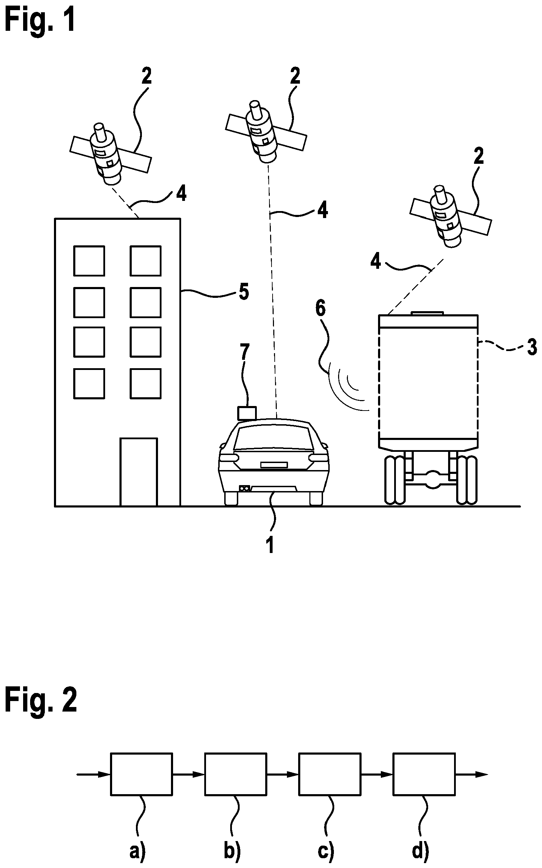

Fig. 1 zeigt schematisch ein Fahrzeug 1, hier ein Automobil, bei dem eine satellitengestützte Position ermittelt wird. Hierzu wird ein hier beschriebenes Verfahren verwendet. Zunächst erfolgt ein Erkennen einer Mehrzahl von Satelliten 2, hier drei Satelliten 2, die zur Positionsermittlung verwendbar sein können. Zudem erfolgt ein Empfangen von Daten, die bewegbare Empfangshindernisse 3 in der Umgebung des Fahrzeugs 1 charakterisieren. Sodann wird eine reduzierte Auswahl von Satelliten 2 aus der Mehrzahl von Satelliten 2 anhand der zuvor empfangenen Daten ermittelt. In dem hier gezeigten Beispiel ist der auf der rechten Seite dargestellte Satellit 2 nicht mehr Bestandteil der reduzierten Auswahl. Anschließend erfolgt ein Bestimmen einer Position des Fahrzeugs 1 unter Verwendung von Signalen 4, die von der reduzierten Auswahl von Satelliten 2 ausgesendet wurden.

Bei dem in Fig. 1 gezeigten Beispiel wird die Mehrzahl von Satelliten 2 um den auf der rechten Seite der Fig. 1 dargestellten Satelliten 2 reduziert, dessen ausgesendete Signale 4 durch das bewegbare Empfangshindernis 3 beeinflusst sind. So ist der Darstellung nach Fig. 1 zu entnehmen, dass der Weg der ausgesendeten Signale 4 hin zu dem Fahrzeug 1 durch das bewegbare Empfangshindernis 3 blockiert wird. Mit anderen Worten erfolgt eine Abschattung durch das bewegbare Empfangshindernis 3.

Zudem werden zusätzlich Daten empfangen, die unbewegbare Empfangshindernisse 5 charakterisieren. Diese Daten werden zusätzlich genutzt, um die Auswahl von Satelliten 2 zu reduzieren. Das unbewegbare Empfangshindernis 5 ist hier ein Gebäude, das ebenfalls zu einer Abschattung führt. Dementsprechend wird auch der auf der linken Seite der Fig. 1 dargestellte Satellit 2 aus der Auswahl von Satelliten herausgenommen.

In Fig. 1 ist weiterhin angedeutet, dass die empfangenen Daten, die bewegbare Empfangshindernisse 3 charakterisieren, zumindest teilweise aus einer Kommunikation 6 mit weiteren Fahrzeugen stammen können. Diese weiteren Fahrzeuge bilden in diesem Zusammenhang bewegbare Empfangshindernisse 3 in der Umgebung des Fahrzeugs 1. In Fig. 1 ist eines solches weiteres Fahrzeug in Form eines Lastkraftwagens dargestellt, der das bewegbare Empfangshindernis 3 bildet.

Alternativ oder kumulativ können die empfangenen Daten, die bewegbare Empfangshindernisse 3 charakterisieren, zumindest teilweise mit Umfeldsensoren 7 des Fahrzeugs 1 ermittelt werden. Natürlich können entsprechende Umfeldsensoren 7 auch dazu dienen, Daten zu ermitteln, die unbewegbare Empfangshindernisse 5 charakterisieren.

In Fig. 2 ist schematisch ein Ablaufdiagramm des beschriebenen Verfahrens gezeigt. Verdeutlicht sind die Verfahrensschritte a) bis d), welche zur Positionsermittlung nacheinander durchgeführt werden.

Das Verfahren trägt insbesondere dazu bei, eine dynamische Selektion von GNSS-Daten beispielsweise in einem Positionssensor eines Fahrzeugs zu ermöglichen. Ferner kann das Verfahren dazu beitragen, einen oder mehrere der nachstehenden Vorteile zu erreichen:
- Multipfadreflexionen von nicht sichtbaren Satelliten können innerhalb eines Positionssensors ausgeschlossen werden,
- die Positionsgenauigkeit des Fahrzeugs wird erhöht,
- die Verarbeitungsgeschwindigkeit im Positionssensor wird erhöht, da nur sichtbare bzw. relevante Satelliten aus dem Almanach in den Berechnungen mit einbezogen werden.

## Patentansprüche

1. Verfahren zur satellitengestützten Ermittlung einer Position eines Fahrzeugs (1) mit einem Positionssensor des Fahrzeugs (1), aufweisend die folgenden Schritte:
a) Erkennen einer Mehrzahl von Satelliten (2), die zur Positionsermittlung verwendbar sein können,
b) Empfangen von Daten, die bewegbare Empfangshindernisse (3) in der Umgebung des Fahrzeugs (1) charakterisieren,
c) Ermitteln einer reduzierten Auswahl von Satelliten (2) aus der Mehrzahl von Satelliten (2) anhand der in Schritt b) empfangenen Daten,
d) Bestimmen einer Position des Fahrzeugs (1) unter Verwendung von Signalen (4), die von der reduzierten Auswahl von Satelliten (2) ausgesendet wurden.

2. Verfahren nach Anspruch 1, wobei die Mehrzahl von Satelliten (2) in Schritt c) um Satelliten (2) reduziert wird, deren ausgesendete Signale (4) durch bewegbare Empfangshindernisse (3), die durch die in Schritt b) empfangenen Daten charakterisiert sind, beeinflusst sein könnten.

3. Verfahren nach einem der vorhergehenden Ansprüche, wobei die Mehrzahl von Satelliten (2) in Schritt c) um Satelliten (2) reduziert wird, die einen Winkel zum Horizont aufweisen, der kleiner ist als ein Mindestinklinationswinkel.

4. Verfahren nach einem der vorhergehenden Ansprüche, wobei in Schritt b) zusätzlich Daten empfangen werden, die unbewegbare Empfangshindernisse (5) charakterisieren und in Schritt c) die Auswahl von Satelliten (2) zusätzlich anhand von diesen Daten reduziert wird.

5. Verfahren nach einem der vorhergehenden Ansprüche, wobei die in Schritt b) empfangenen Daten, die bewegbare Empfangshindernisse (3) charakterisieren, zumindest teilweise aus einer Kommunikation (6) mit weiteren Fahrzeugen stammen, welche bewegbare Empfangshindernisse (3) in der Umgebung des Fahrzeugs (1) bilden.

6. Verfahren nach einem der vorhergehenden Ansprüche, wobei die in Schritt b) empfangenen Daten, die bewegbare Empfangshindernisse (3) charakterisieren, zumindest teilweise mit Umfeldsensoren (7) des Fahrzeugs (1) ermittelt wurden.

7. Positionssensor, welcher zur Durchführung des Verfahrens nach einem der Ansprüche 1 bis 6 eingerichtet ist.

8. Computerprogramm, umfassend Befehle, die bewirken, dass der Positionssensor des Anspruchs 7 die Verfahrensschritte nach einem der Ansprüche 1 bis 6 ausführt.

9. Maschinenlesbares Speichermedium, auf dem das Computerprogramm nach Anspruch 8 gespeichert ist.

## Claims

1. Method for the satellite-based determination of a position of a vehicle (1) using a position sensor of the vehicle (1), comprising the following steps:
a) identifying a plurality of satellites (2) which may be usable for the position determination,
b) receiving data which characterize movable reception obstacles (3) in the vicinity of the vehicle (1),
c) determining a reduced selection of satellites (2) from the plurality of satellites (2), based on the data received in step b),
d) determining a position of the vehicle (1) using signals (4) which have been transmitted from the reduced selection of satellites (2).

2. Method according to Claim 1, wherein the plurality of satellites (2) in step c) are reduced by satellites (2), the transmitted signals (4) of which could be influenced by movable reception obstacles (3) which are **characterized by** the data received in step b).

3. Method according to one of the preceding claims, wherein the plurality of satellites (2) in step c) are reduced by satellites (2) which are at an angle with respect to the horizon which is smaller than a minimum angle of inclination.

4. Method according to one of the preceding claims, wherein data which characterize immovable reception obstacles (5) are additionally received in step b) and the selection of satellites (2) is additionally reduced based on these data in step c).

5. Method according to one of the preceding claims, wherein the data received in step b) which characterize movable reception obstacles (3) originate at least partially from communication (6) with other vehicles which form movable reception obstacles (3) in the vicinity of the vehicle (1).

6. Method according to one of the preceding claims, wherein the data received in step b) which characterize movable reception obstacles (3) have been at least partially determined using environmental sensors (7) of the vehicle (1).

7. Position sensor which is configured to carry out the method according to one of Claims 1 to 6.

8. Computer program comprising instructions which cause the position sensor of Claim 7 to carry out the method steps according to one of Claims 1 to 6.

9. Machine-readable storage medium, on which the computer program according to Claim 8 is stored.

## Revendications

1. Procédé de détermination, assistée par satellites, d'une position d'un véhicule (1) à l'aide d'un capteur de position du véhicule (1), ledit procédé comportant les étapes suivantes :
a) détecter une pluralité de satellites (2) qui peuvent être utilisés pour déterminer la position,
b) recevoir des données qui caractérisent des obstacles de réception mobiles (3) dans l'environnement du véhicule (1),
c) déterminer une sélection réduite de satellites (2) parmi la pluralité de satellites (2) sur la base des données reçues à l'étape b),
d) déterminer une position du véhicule (1) à l'aide de signaux (4) qui ont été émis par la sélection réduite de satellites (2).

2. Procédé selon la revendication 1, la pluralité de satellites (2) à l'étape c) étant réduite du nombre de satellites (2) dont les signaux émis (4) pourraient être sous l'influence d'obstacles de réception mobiles (3) qui sont **caractérisés par** les données reçues à l'étape b).

3. Procédé selon l'une des revendications précédentes, la pluralité de satellites (2) à l'étape c) étant réduite du nombre de satellites (2) qui forment avec l'horizon un angle qui est inférieur à un angle d'inclinaison minimum.

4. Procédé selon l'une des revendications précédentes, des données supplémentaires étant reçues à l'étape b) qui caractérisent des obstacles de réception immobiles (5) et la sélection de satellites (2) étant en plus réduite à l'étape c) sur la base de ces données.

5. Procédé selon l'une des revendications précédentes, les données reçues à l'étape b), qui caractérisent les obstacles de réception mobiles (3), provenant au moins partiellement d'une communication (6) avec d'autres véhicules qui forment des obstacles de réception mobiles (3) dans l'environnement du véhicule (1).

6. Procédé selon l'une des revendications précédentes, les données reçues à l'étape b), qui caractérisent les obstacles de réception mobiles (3), ayant été déterminées au moins partiellement à l'aide de capteurs d'environnement (7) du véhicule (1).

7. Capteur de position qui est conçu pour mettre en œuvre le procédé selon l'une des revendications 1 à 6.

8. Logiciel comprenant des instructions qui amènent le capteur de position de la revendication 7 à réaliser les étapes de procédé selon l'une des revendications 1 à 6.

9. Support de stockage lisible par machine sur lequel est stocké le logiciel selon la revendication 8.
